# EUROPEAN PATENT SPECIFICATION

(11) **EP 2 282 890 B1**
(45) Date of publication and mention of the grant of the patent: **25.07.2018**
(21) Application number: 08816963.6
(22) Date of filing: 30.05.2008
(51) Int. Cl.: B32B 27/00, C08F 2/00, C08G 18/62, C08F 2/48, C09D 175/04, C08L 75/04, C08G 18/00

(54) **UV CURABLE COATING COMPOSITIONS CONTAINING ALIPHATIC URETHANE ACRYLATE RESINS**
ALIPHATISCHE URETHANACRYLATHARZE ENTHALTENDE UV-AUSHÄRTBARE BESCHICHTUNGSZUSAMMENSETZUNGEN
COMPOSITIONS DE REVÊTEMENT DURCISSABLES AUX UV CONTENANT DES RÉSINES D URÉTHANE-ACRYLATE ALIPHATIQUES

(43) Date of publication of application: 16.02.2011
(73) Proprietor: Red Spot Paint & Varnish Co., Inc., Evansville, IN 47701 (US)
(72) Inventor: WEBER, Eileen, Evansville IN 47720 (US)
(74) Representative: Murgitroyd & Company
(86) International application number: PCT/US2008/065301
(87) International publication number: WO 2009/145781

(56) References cited:
- WO-A1-92/17337
- DE-A1-102006 047 863
- US-A- 5 571 570
- US-A1- 2006 079 660
- US-A1- 2006 106 157
- US-A1- 2006 205 911
- US-A1- 2007 231 577
- US-B1- 6 316 515
- US-B1- 6 632 535

## Description

### BACKGROUND

The present invention relates to coating compositions, coated articles, and methods for their production, that involve the use of a blend of selected types of resins.

As further background, plastic substrates such as but not limited to polycarbonate, acrylic and polyester often are used in a variety of applications as replacements for more traditional materials such as glass. Plastics can offer excellent properties such as impact resistance and optical clarity while providing weight reduction and abundant design flexibility. Despite the numerous benefits that plastic offers, they have a major drawback in that they often do not provide the desired degree of chemical, scratch, mar and abrasion resistance, UV resistance and/or exterior durability.

It is known that both conventional thermal cured and ultraviolet (UV) cured coatings for exterior applications exhibiting scratch and abrasion resistance have offered adequate protection and performance of these various plastic substrates when direct exposure angles or durations are limited. It is also known that UV cured coatings are often the preferred coating of choice because they offer distinct advantages such as improved cycles times and reduced work in process over conventionally cured alternatives.

Despite the many advantages of current exterior coatings and more specifically of UV curable coatings - they still do not meet the all expectations and often lack desirable properties and combinations of properties that are very difficult to achieve with traditionally available technology. Traditional UV topcoats for scratch and abrasion resistant applications most often are comprised primarily of high functionality and highly reactive acrylates. Although these characteristics impart the desired hardness properties, they are prone to cured resin shrinkage and steric hindrance. The steric hindrance results in a higher than desired number of unreacted acrylate bonds in the cured polymer resin which make the cured coating more susceptible to premature UV and environmental degradation. Additionally, known UV topcoats upon curing create a rigid, inflexible coating. Such inflexible coatings when subjected to conditions of expansion or contraction during processing or field use or when applied to materials containing high internal stress result in inadequate performance such as cracking, compromised exterior durability or other imperfections. Thus it can be difficult for a single coating composition to provide the desired level of a high surface hardness, scratch resistance, chemical resistance, UV resistance and exterior durability.

In preferred embodiments, the present invention addresses the need for UV curable coatings that along with high scratch and abrasion resistance offer properties of improved exterior durability, UV stability, thermal stability and flexibility especially for design applications that subject the coated material to strenuous environments. Additionally,the current invention describes the processes for using these materials and the resulting coated articles.

### SUMMAR Y

The present invention relates to a UV curable coating composition and a product, comprising a molded plastic article and a cured coating formed with a composition as claimed hereafter. Preferred embodiments of the invention are set forth in the dependent claims.

The invention provides a coating composition that includes a unique blend of UV-curable resins. A first resin of the blend is an aliphatic urethane acrylate formed by the reaction of an aliphatic polyisocyanate component containing iminooxadiazine dione, isocyanurate,uretdione, urethane, allophanate, biuret or oxadiazine trione groups, with an alcohol component with a molecular weight of about 100 to about 2000 and containing at least one monobasic, hydroxyl-functional linear or branched alkyl ester of meth(acrylic)acid. This coating composition also includes at least a second aliphatic urethane acrylate, which is encompassed by Formula II disclosed herein below. According to the invention, the first aliphatic urethane acrylate has a molecular weight in the range of about 800 to about 2500 g/Mol, and the first aliphatic urethane acrylate contains about 3 to about 5 polymerizable acrylate groups per molecule.

According to the invention, the molecular weight of the second aliphatic urethane acrylate is in the range of about 500 to about 2000 g/Mol. The coating compositions contain a solvent that assists in controlled application and processing of the material.
The coating compositions contain at least two multifunctional acrylates each having molecular weights between 170 and 1000 and two polymerizable unsaturated groups per molecule. The coating compositions of the invention include stabilizers such as hindered amine light stabilizers and UV absorbers of the benzotriazole or benzotriazine families, or derivatives thereof. The coating compositions of the invention contain one or more organic-inorganic hybrid materials synthesized through a sol gel process.

In additional embodiments, the present invention provides coated articles and coating processes involving the use of the coating compositions described herein. In certain forms, an inventive coated article will have a base plastic material having a thickness of about 0.75 to 20 mm, and a cured top coating formed by reaction of a coating composition as described herein and having a thickness in the range of about 3 to about 35 microns. The cured top coating can provide a high degree of scratch, abrasion, mar and chemical resistance along with superior UV resistance, exterior durability and thermal stability. In certain forms, inventive processes will include the application of a coating composition as described herein by spray coat, flowcoat or curtain coat techniques.

Additional embodiments of the present invention as well as features and advantages thereof will be evident from the descriptions herein.

### BRIEF DESCRIPTION OF THE FIGURES

FIG. 1 provides a perspective partial cutaway illustration of a vehicle having a coated forward lighting lens according to one aspect of the invention.
FIG. 2 provides a side partial cutaway illustration of the vehicle of FIG. 1.

### DETAILED DESCRIPTION

For the purposes of promoting an understanding of the principles of the invention, reference will now be made to certain embodiments and specific language will be used to describe the same. It will nevertheless be understood that no limitation of the scope of the invention is thereby intended, such alterations and further modifications in the illustrated device, and such further applications of the principles of the invention as described herein being contemplated as would normally occur to one skilled in the art to which the invention relates.

As disclosed above, the present invention relates to unique coating compositions and to methods and coated articles that employ or include the coating compositions. According to the present invention, coating compositions include a novel blend of resins, the blend including first and second acrylated aliphatic urethane resins. Such coating compositions include a first urethane acrylate resin which is formed by the reaction of an aliphatic polyisocyanate component containing iminooxadiazine dione, isocyanurate,uretdione urethane,allophanate, biuret or oxadiazine trione groups with an alcohol component containing at least one monobasic, hydroxyl-functional linear or branched alkyl ester of meth(acrylic)acid.

According to the present invention, the first urethane acrylate resin has a molecular weight between about 800 and about 2500 g/Mol. More preferably, the first acrylated aliphatic urethane has a molecular weight of about 1000 to about 1600 g/Mol, with a molecular weight of about 1400 g/Mol being the most preferred in work to date. As would be understood, molecular weights for polymerizable resins given herein are number average molecular weights unless otherwise specified. The alcohol component used in the formation of the first urethane acrylate resin can have a molecular weight of about 100 to about 2000 g/Mol. In certain variants, the first urethane acrylate can be the reaction product of:
(a) a polyisocyanate component containing from 20 to 100 mole%, based on the moles of the polyisocyanate component, of iminooxadiazine dione group-containing polyisocyanate trimers encompassed by the formula I: 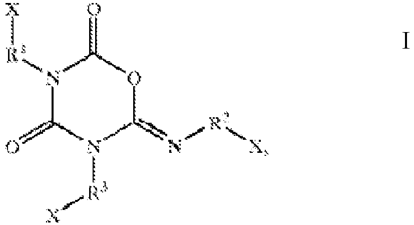 wherein: R¹, R² and R³ of formula I are the same or different and represent linear or branched, C₄-C₂₀ (cyclo) alkyl groups, and X is the same or different and represents isocyanate groups or isocyanate group-containing radicals that also contain iminooxadiazine dione, isocyanurate,uretdione, urethane, allophanate, biuret or oxadiazine trione groups,wherein R¹, R² and R³ of formula I are attached to a nitrogen atom, with
b) an alcohol component containing at least one monobasic, hydroxy-functional, linear or branched C₁-C₁₂ alkyl ester of (meth)acrylic acid. Additional information concerning such urethane acrylate resins suitable for use in the present invention is found in United States Patent No. 6,191,181.
Suitable resins for use as the first aliphatic urethane acrylate may be obtained for example from Bayer MaterialScience under the tradename Desmolux.

In certain embodiments, the first urethane acrylate has a functionality of about 2 to about 6, more preferably about 3 to about 5, and most preferably about 3.5 to about 4. In addition or alternatively, the first urethane acrylate can exhibit the capacity for ultraviolet radiation curing to provide a hard coating, for example having a pencil hardness above 4, e.g. about 4 to about 7.

The first aliphatic urethane acrylate resin can be provided alone or can be provided admixed with one or more reactive diluents, for example HDDA(1,6 Hexanediol diacrylate),TPGDA(tripropyleneglycol diacrylate),DPGDA (dipropyleneglycol diacrylate), TMPTA (trimethylolpropane triacrylate), and/or GPTA(glycerolpropoxy triacrylate). When admixed with one or more reactive diluents, the first aliphatic urethane acrylate resin can constitute about 70% to about 90% of the mixture in certain embodiments.
The coating compositions of the invention include a second urethane acrylate resin different from the first urethane acrylate resin. The second urethane acrylate resin is encompassed by the formula II: 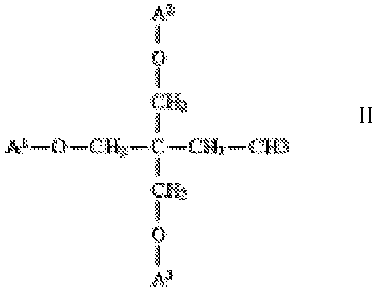 wherein A¹, A², and A³ are each a group of the formula III: 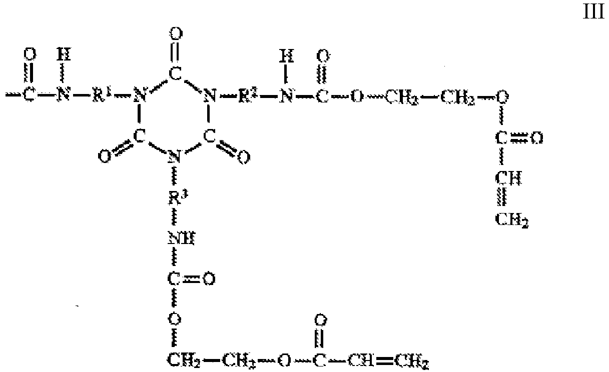 wherein R¹, R² , and R³ of formula III, which can be the same or different, are each a linear aliphatic group having from 2 to about 12 carbon atoms, or a cycloaliphatic group having from 4 to about 12 carbon atoms. R¹ , R², and R³ of formula III are each preferably an alkylene group having from 2 to about 12 carbon atoms. Compounds of Formula II can be prepared, for example, as described in United States Patent No.5,658,672. This'672 patent teaches that Ebecryl 8301 (Cytec Surface Specialties, Smyrna, GA), which may be used in the present invention, is a blend including a diluent and a hexafunctional acrylate oligomer according to formula II in a weight ratio of about 48:52, respectively, with the diluent being ethylene-/diethylene glycol diacrylate(based ohydroxyethylacrylate), mostly ethylene glycol diacrylate.

According to the present invention, the second urethane acrylate resin has a molecular weight in the range of about 500 to about 2000 g/Mol, more preferably about 800 to about 1000 g/Mol,and most preferably to date about 800 g/Mol. In certain embodiments, the second urethane acrylate has a functionality of about 2 to about 10, more preferably about 4 to about 8, and most preferably about 6.

As disclosed above, the invention relates to coating compositions which include a blend of resins including a first urethane acrylate resin as discussed above and a second urethane acrylate resin as discussed above. In preferred embodiments, exclusive of any inert solvent present in the composition, the first urethane acrylate resin constitutes about 10% to about 40% by weight of the composition. More preferably in such embodiments, exclusive of any inert solvent present, the first urethane acrylate resin makes up about 10% to about 30% of the composition, even more preferably about 15 to about 25%.As to the second urethane acrylate resin, exclusive of any solvent present, it preferably constitutes about 20% to about 50% by weight of the coating composition, more preferably about 25 to 35%.

In the invention defined herein, the first urethane acrylate resin and the second acrylate resin are included in the coating composition in a weight ratio, or in a molecular ratio, of 1:3 to 3:1.

When included in a blended resin coating composition, the first and second urethane acrylate resins can provide preferred compositions which form UV-cured coatings of with a high degree of surface hardness as measured with steel wool per FMVSS108 and taber abrasion per ASTMD1044. Additionally, preferred blended coatings including these urethane acrylates provide excellent weathering properties as quantified by well accepted accelerated and natural weathering test methods and thermal crack resistance. Also, they offer advantageous curing rates and material compatibility.

The surface hardness of resin blend coating compositions as disclosed herein can be further improved with the addition of an acrylated organic-inorganic hybrid material, typically produced through a sol gel process. The preferred organic-inorganic hybrid is compromised of silica particles in the range of about 5 nm to about 100 nm that are spherical, non-porous and amorphous and a multifunctional acrylate with a molecular weight of about 200 to about 450 and at least two polymerizable unsaturated groups per molecule. The preferred final molecular weight the organic-inorganic hybrid is between about 500 and about 3000. Improved surface hardness properties can be achieved with additions of about 5% to about 35% by weight (exclusive of any inert solvent present) of such acrylated organic-inorganic hybrid materials. More preferably the content of the acrylated organic-inorganic hybrid, is about 8% to about 18% by weight, exclusive of any inert solvent present. Examples of suitable organic-inorganic materials that can be used in compositions, coatings and coated articles of the invention include Etercure 601A-35, Etercure 601B-35,Etercure 601C-35,Etercure 601H-35, (Eternal Chemical Company,Ltd, Taiwan)and RX11402 (Cytec Surface Specialties,Smyrna, GA).

Coating compositions of the invention include two multifunctional acrylates.

The multifunctional acrylate(s) employed in coating compositions of the invention will depend upon the desired application viscosity, application method and performance properties. Typical multifunctional acrylates are of the reactive diluent type having a molecular weight of about 170 to about 1000 and contain at least two polymerizable unsaturated groups per molecule. Representative multifunctional acrylates include dipropylene glycol diacrylate, triproplyene glycol diacrylate, 1,6-hexanediol diacrylate, pentaerythritol triacrylate, pentaerythritol tetra acrylate, tricyclodecane dimethanol diacrylate, ditrimethylolpropane tetraacrylate, dipentaertyhritol pentaacrylate, trimethylolpropane triacrylate, tetraethleneglycol diacrylate, and the like. The coating composition according to the present invention includes two such multifunctional acrylates each in an amount of 5% to 15% of a first such multifunctional acrylate with two polymerizable unsaturated groups per molecule and 15% to 25% of a second such multifunctional acrylate with three polymerizable unsaturated groups per molecule.

Photoinitiators suitable for use in coating compositions of the invention include a blend of diphenylphosphine oxide and α-hydroxyketone type photoinitiators with a more preferred blend of bis-2,4,6-trimethylbenzolydiphenylphosphine oxide and difunctional α-hydroxy-cyclohexyl-phenyl-ketone.

At least one photoinitiator is added in amounts sufficient to obtain the desired cure response. In preferred formulations of the invention, a blend of at least two photoinitiators is included in amounts of about 0.25% to about 15% by weight. The range of the first preferred photoinitiator (α diphenylphosphine oxide type as noted above) is about 0.5% to about 2.5% in certain embodiments. The range of the second preferred photoinitiator (an α-hydroxyketone type as noted above) is about 4% to about 13% in certain embodiments. In certain inventive formulations,a further benefit is gained by the addition of a third photoinitiator, for example a hydroxyalkylphenone type photoinitiator, in the range of about 0.5% to about 4.5%. The amounts of photoinitiator(s)included will vary based upon many factors such as the types of UV cure equipment, the UV equipment set up, cure rate and durability desired.

Coating compositions of the invention also include stabilizing materials to maximize exterior durability and UV resistance. Suitable stabilizers include hindered amines and UV absorbers such as benzotriazole or benzotriazine derivatives. The amount of stabilizers in the system vary depending on application parameters and desired performance properties to maximize weatherability without sacrificing cure response and surface hardness.

In more preferred compositions, the hindered amine is in the range of about 0.5% to about 4.5%,hydroxyphenyl benzotriazine (or other suitable compound) is in the range of about 2% to about 15% and an antioxidant is in the range of about 0.25% to about 2.0%.

The compositions of the invention include a blend of inert solvents. Examples of suitable inert solvents include ester solvents such as ethyl acetate and butyl acetate; ketone solvents such as acetone and methyl ethyl ketone; alcohol solvents such as isopropyl alcohol and secondary butyl alcohol. The amount and type of solvent in the composition will vary depending on application method and equipment capabilities and preference. For example, in a flowcoat or curtain coat application, inert solvents should not be excessively aggressive to the base plastic of the molded article. In certain forms of the invention, the inert solvent content in the coating composition as a whole can range from 0% to 80% by weight with a preferred solvent content of 35% to 65% by weight.

Various other additives can also be included in coating compositions of the invention to further improve appearance and/or performance properties of the cured coating. Examples of suitable additives are reactive and non-reactive acrylic or silicone flow, slip and mar and leveling agents that assist in substrate wetting and leveling of the composition and phenolic based antioxidants that provide thermal and process stability. One particularly preferred additive is a polysilixoane solution, such as that commercially available under the tradename Byk 301(BYK-CHEMIE, Wallingford, CT).

In certain preferred embodiments, a resin blend coating composition is provided that includes an inert organic solvent in an amount of about 10-50% by weight, a first aliphatic urethane acrylate as discussed above in an amount of about 3% to about 20% by weight, a second aliphatic urethane acrylate as discussed above in an amount of about 3% to about 20% by weight, a reactive diluent component in an amount of about 5% to about 30% by weight wherein the reactive diluent component includes one or more multifunctional acrylates, one or more photoinitiators, e.g. selected from those identified herein, and one or more light stabilizers, e.g. selected from those identified herein. More preferred compositions of this embodiment further include an antioxidant and a flow additive, e.g. as identified herein. In certain forms, in the preparation of the first aliphatic urethane acrylate, X of Formula I represents isocyanate groups. In other preferred forms, X of Formula I represents isocyanate group-containing radicals that also contain iminooxadiazine dione groups; or X of Formula I represents isocyanate group-containing radicals that also contain isocyanurate groups; or X of Formula I represents isocyanate group-containing radicals that also contain uretdione groups; or X of Formula I represents isocyanate group-containing radicals that also contain, urethane groups; or X of Formula I represents isocyanate group-containing radicals that also contain allophanate groups; or X of Formula I represents isocyanate group-containing radicals that also contain biuret groups; or X of Formula I represents isocyanate group-containing radicals that also contain oxadiazine trione groups. In these embodiments, the first aliphatic urethane acrylate, and the second aliphatic urethane acrylate, may also have any of the other characterizing features as disclosed herein.

Coating compositions of the invention can be applied to a selected article by various conventional coating methods such as conventional spray, HVLP spray, air assisted/airless spray, rotary atomization, flowcoat, curtain coat or rollcoat. Further, the coating compositions can be applied directly to the substrate or over a previously-cured or uncured coating. The desired film thickness of the cured film formed with coating compositions of the invention is about 3 microns to about 40 microns with the most preferred dry film thickness being about 5 microns to about 20 microns.

Once applied, the coating composition can be cured by irradiation with ultraviolet energy as is known to those skilled in the art. In this regard, the irradiation is continued until curing is complete, with preferred exposure times typically being less than 300 seconds and more preferably about 20 to about 100 seconds. Curing temperatures can range from room temperature to the heat distortion temperature of the substrate, while curing distances are typically between about 2 and 18 inches from the UV source achieving a minimum of about 100 mW/cm² of intensity.

An ultraviolet light source having a wavelength range of between about 180 nanometers and 450 nanometers is preferred for curing the topcoat. Acceptable light sources that emit ultraviolet energy include sunlight, sun lamps, LED lamps, carbon or xenon arc lamps, and mercury vapor lamps.More preferred examples of suitable light sources include electrode type arc lamps or electrodeless type microwave lamps equipped with mercury vapor type or metal halide type bulbs that provide strong UV energy output in the aforementioned range.

The most preferred irradiation is achieved through a series of medium to high pressure mercury lamps having an intensity of about 100 W/in to about 600 W/in and provides about 1500 to about 15000 mJ/cm² of UV energy in about 20 to about 75 seconds of exposure when measured with a suitable compact radiometer. More preferred energy outputs are about 3000 to about 8000 mJ/cm². It should be noted that intensity and energy measurement equipment vary depending on the bandwidths that they measure. When the aforementioned preferred coating compositions are processed under these described irradiation conditions, the final coatings provide a unique blend of properties that adequately protect the molded plastic article from environmental and chemical degradation under severe exposure conditions.

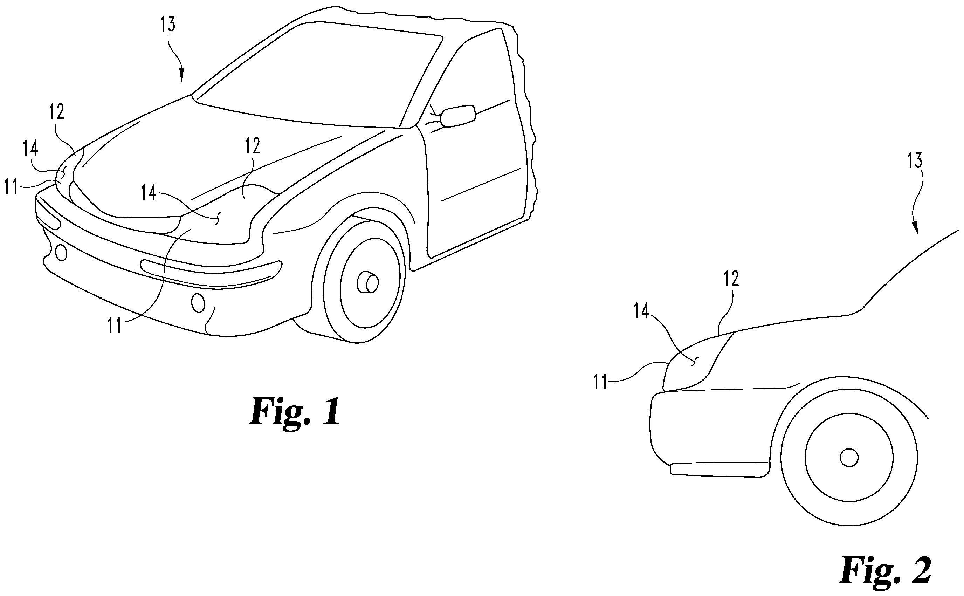

In certain embodiments of the invention, coating compositions as described herein are used to form a coated article, especially a coated plastic article such as one made with polycarbonate or polyester. Preferred embodiments provide coated plastic lenses, and in particular forms coated, clear plastic lenses such as vehicle forward lighting lenses, e.g. made with polycarbonate. In this regard, with reference to Figures 1 and 2, shown is one embodiment of a coated vehicle forward lighting lens. Lens 11 is illustrative of a "wrapped lighting" lens in which the lens includes a significant upper component 12 that occurs in a non-vertical orientation (e.g. including at least about 10% of the total external surface area of the lens) and is designed into the hoodline of the vehicle 13, and thus is more directly exposed to incident radiation from sunlight. Such wrapped lenses have become common in current vehicles, and present challenges for coatings designed to provide UV protection to prevent yellowing due to sun exposure. In preferred inventive embodiments, the exterior surface 14 of the lens 11, including the exterior surface of the upper component 12, is topcoated with a UV-cured, clear coating composition of the invention. Additional embodiments of the present invention thus provide such coated forward vehicle lighting lenses as well as vehicles including them.

For the purpose of promoting a further understanding of the invention and certain embodiments thereof, the following Examples are provided. It will be understood that these Examples are illustrative.

### EXAMPLE 1

Preparation of UV Curable Blend Compositions The components listed in Table 1 are combined using known techniques to form a UV curable resin blend composition including amounts of the first and second urethane acrylate resins as described hereinabove, along with multifunctional acrylates, photoinitiators, light stabilizers, an antioxidant and a flow improver. One or more inert solvents as described above can be included in the composition to alter its flow properties.

**TABLE 1**

| **Component:** | **Weight Percent (exclusive of solvent)** |
|---|---|
| First Urethane Acrylate Resin | 10 -40% |
| Second Urethane Acrylate Resin | 20 - 50% |
| Multifunctional Acrylate #1 (functionality =2) | 5 - 55% |
| Multifunctional Acrylate #2 (functionality =3) | 5 - 55% |
| Photoinitiator #1 | 0.25 - 2.5% |
| Photoinitiator #2 | 4 - 9% |
| Photoinitiator #3 | 0.5 - 4% |
| Hindered Amine Light Stabilizer | 0.5 - 4.5% |
| Benzotriazine Absorber | 2 - 15% |
| Antioxidant | 0.25 - 2.0% |
| Flow Additive | 0.1 - 5.0% |

### EXAMPLE 2

### Preparation of UV Curable Blend Compositions

The components listed in Table 2 are combined using known techniques to form a UV curable resin blend composition including amounts of the first and second urethane acrylate resins as described hereinabove, along with multifunctional acrylates, photoinitiators, light stabilizers, an antioxidant and a flow improver. One or more inert solvents as described above can be included in the composition to alter its flow properties.

**TABLE 2**

| **Component:** | **Weight Percent (exclusive of solvent)** |
|---|---|
| First Urethane Acrylate Resin | 10 -40% |
| Second Urethane Acrylate Resin | 20 -50% |
| Organic-Inorganic Hybrid Acrylate | 5 - 35% |
| Multifunctional Acrylate #1 (functionality = 2) | 5 - 55% |
| Multifunctional Acrylate #2 (functionality = 3) | 5 - 55% |
| Photoinitiator #1 | 0.25 - 2.5% |
| Photoinitiator #2 | 4 - 13% |
| Hindered Amine Light Stabilizer | 0.5 - 4.5% |
| Benzotriazine Absorber | 2 - 15% |
| Antioxidant | 0.25 - 2.0% |
| Flow Additive | 0.1 - 5.0% |

### EXAMPLE 3

### Preparation of Coated Plastic Article by Flowcoat Method

A formulation of Example 1 or 2 is prepared also containing one or more inert solvents to achieve a specific gravity that will result in desirable film thickness range upon cure. The preferred specific gravity is in the range of less than about 0.975. Coating is applied to an injection molded polycarbonate lens mounted on a fixture by a flowcoat method in which coating is applied only to the top and side surfaces of the lens. The wet coated lens is subjected to a short ambient flash followed by a convection heated air flash to evaporate solvent. The wet coated lens is then exposed to irradiation with a 240 W/cm standard mercury lamp at intensity of about 450 mW/cm² in air resulting in a coated article with a coating dry film thickness of about 8 - 12 microns.

### EXAMPLE 4

### Preparation of Coated Plastic Article by Spray Method

A formulation of Example 1 or 2, also containing one or more inert solvents, is applied to an injection molded polycarbonate lens by a spray method using a conventional spray gun mounted on a robot. A programmed spray pattern is used to achieve consistent coverage of the coating and cured dry film thickness in the range of 8 to 12 microns. The wet coated lens is subjected to heated convection air to evaporate solvent prior to an irradiation with a 240 W/cm standard mercury lamp at intensity of about 450 mW/cm² in air.

The uses of the terms "a" and "an" and "the" and similar references in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non claimed element as essential to the practice of the invention.

## Claims

1. A UV curable coating composition, comprising:
(1) an inert solvent;
(2) a first aliphatic urethane acrylate resin formed by the reaction of an aliphatic polyisocyanate component containing at least one of iminooxadiazine dione, isocyanurate, uretdione, urethane, allophanate, biuret and oxadiazine trione groups, with an alcohol component containing at least one monobasic, hydroxyl-functional linear or branched alkyl ester of meth(acrylic) acid wherein the first urethane acrylate resin has an average molecular weight of 800 to 2,500 Daltons, and wherein the first urethane acrylate resin contains 3 to 5 polymerizable acrylate groups per molecule;
(3) a second aliphatic urethane acrylate resin comprising the structure of formula II: 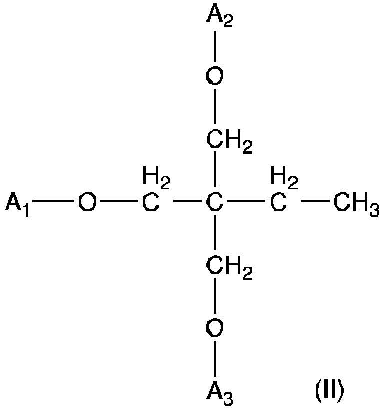 wherein A₁, A₂, and A₃ are each a group of formula III: 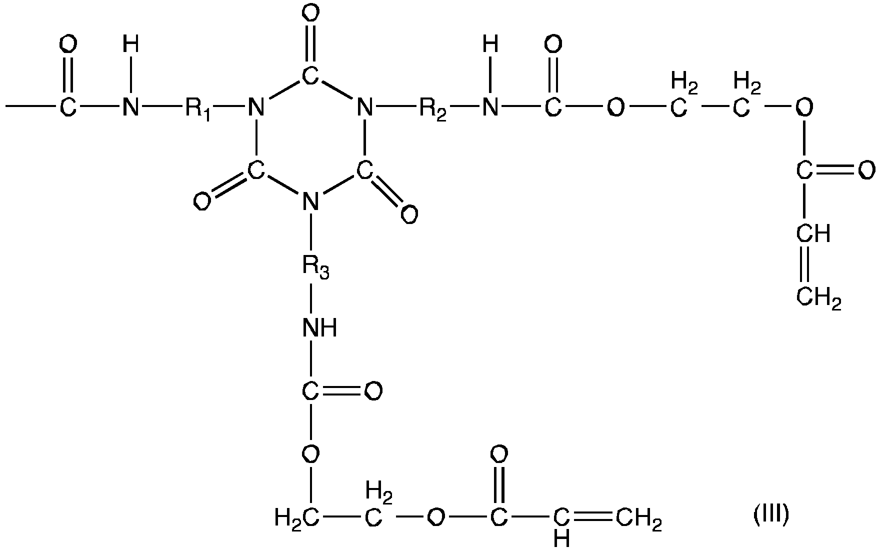 wherein R₁, R₂, and R₃ of formula III are the same or different, and each comprise a linear aliphatic group having from 2 to 12 carbon atoms, or a cycloaliphatic group having from 4 to 12 carbon atoms, wherein the second urethane acrylate has an average molecular weight of 500 to 2,000 Daltons, wherein the second urethane acrylate resin contains 4 to 7 polymerizable acrylate groups per molecule, and wherein the first aliphatic urethane acrylate resin and the second aliphatic urethane acrylate resin comprise a weight ratio of 1:3 to 3:1;
(4) a first multifunctional acrylate, wherein the first multifunctional acrylate has an average molecular weight of 170 to 1,000 Daltons, wherein the composition comprises 5% to 15% by weight of the first multifunctional acrylate, and wherein the first multifunctional acrylate comprises two polymerizable unsaturated groups per molecule;
(5) a second multifunctional acrylate, wherein the second multifunctional acrylate has an average molecular weight of 170 to 1,000 Daltons, wherein the composition comprises 15% to 25% by weight of the second multifunctional acrylate, and wherein the second multifunctional acrylate comprises three polymerizable unsaturated groups per molecule;
(6) a photoinitiator selected from the group consisting of diphenylphosphine oxides, phenylglyoxylates, α-hydroxyketones, and difunctional α-hydroxyketones.;
(7) a hindered amine light stabilizer;
(8) a UV absorber comprising at least one of a benzotriazole and a benzotriazine; and
(9) an organic-inorganic hybrid material.

2. The composition of claim 1, wherein the polyisocyanate component contains iminooxadiazine dione groups.

3. The composition of claim 1, wherein the polyisocyanate component contains isocyanurate groups.

4. The composition of claim 1, wherein the polyisocyanate component contains uretdione groups.

5. The composition of claim 1, wherein the polyisocyanate component contains urethane groups.

6. The composition of claim 1, wherein the polyisocyanate component contains allophanate groups.

7. The composition of claim 1, wherein the polyisocyanate component contains biuret groups.

8. The composition of claim 1, wherein the polyisocyanate component contains oxadiazine trione groups.

9. A product, comprising:
- a molded plastic article; and
- a cured coating formed with a composition according to claim 1.

## Patentansprüche

1. Eine UV-härtbare Beschichtungszusammensetzung, beinhaltend:
(1) ein inertes Lösungsmittel;
(2) ein erstes aliphatisches Urethanacrylatharz, das durch die Reaktion von einer aliphatischen Polyisocyanatkomponente, die mindestens eines von Iminooxadiazindion-, Isocyanurat-, Uretdion-, Urethan-, Allophanat-, Biuret- und Oxadiazintriongruppen enthält, mit einer Alkoholkomponente, die mindestens einen monobasischen, hydroxylfunktionellen linearen oder verzweigten Alkylester von Meth(acryl)säure enthält, gebildet wird, wobei das erste Urethanacrylatharz ein durchschnittliches Molekulargewicht von 800 bis 2500 Dalton aufweist und wobei das erste Urethanacrylatharz 3 bis 5 polymerisierbare Acrylatgruppen pro Molekül enthält;
(3) ein zweites aliphatisches Urethanacrylatharz, das die Struktur von Formel II beinhaltet: 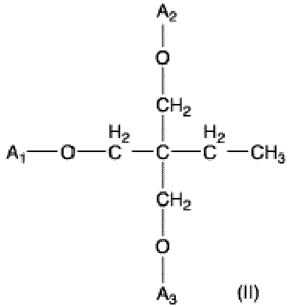 wobei A₁, A₂ und A₃ jeweils eine Gruppe von Formel III sind: 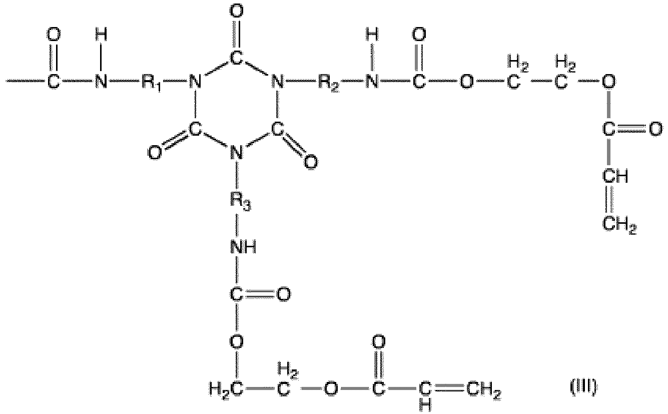 wobei R₁, R₂ und R₃ von Formel III gleich oder unterschiedlich sind und jeweils eine lineare aliphatische Gruppe mit 2 bis 12 Kohlenstoffatomen oder eine cycloaliphatische Gruppe mit 4 bis 12 Kohlenstoffatomen beinhalten, wobei das zweite Urethanacrylat ein durchschnittliches Molekulargewicht von 500 bis 2000 Dalton aufweist, wobei das zweite Urethanacrylatharz 4 bis 7 polymerisierbare Acrylatgruppen pro Molekül enthält und wobei das erste aliphatische Urethanacrylatharz und das zweite aliphatische Urethanacrylatharz ein Gewichtsverhältnis von 1 : 3 bis 3 : 1 beinhalten;
(4) ein erstes mehrfunktionelles Acrylat, wobei das erste mehrfunktionelle Acrylat ein durchschnittliches Molekulargewicht von 170 bis 1000 Dalton aufweist, wobei die Zusammensetzung zu 5 Gew.-% bis 15 Gew.-% das erste mehrfunktionelle Acrylat beinhaltet und wobei das erste mehrfunktionelle Acrylat zwei polymerisierbare ungesättigte Gruppen pro Molekül beinhaltet;
(5) ein zweites mehrfunktionelles Acrylat, wobei das zweite mehrfunktionelle Acrylat ein durchschnittliches Molekulargewicht von 170 bis 1000 Dalton aufweist, wobei die Zusammensetzung zu 15 Gew.-% bis 25 Gew.-% das zweite mehrfunktionelle Acrylat beinhaltet und wobei das zweite mehrfunktionelle Acrylat drei polymerisierbare ungesättigte Gruppen pro Molekül beinhaltet;
(6) einen Photoinitiator, ausgewählt aus der Gruppe, bestehend aus Diphenylphosphinoxiden, Phenylglyoxylaten, α-Hydroxyketonen und bifunktionellen α-Hydroxyketonen;
(7) einen gehinderten Aminlichtstabilisator;
(8) einen UV-Absorber, der mindestens eines von einem Benzotriazol und einem Benzotriazin beinhaltet; und
(9) ein organisch-anorganisches Hybridmaterial.

2. Zusammensetzung gemäß Anspruch 1, wobei die Polyisocyanatkomponente Iminooxadiazindiongruppen enthält.

3. Zusammensetzung gemäß Anspruch 1, wobei die Polyisocyanatkomponente Isocyanuratgruppen enthält.

4. Zusammensetzung gemäß Anspruch 1, wobei die Polyisocyanatkomponente Uretdiongruppen enthält.

5. Zusammensetzung gemäß Anspruch 1, wobei die Polyisocyanatkomponente Urethangruppen enthält.

6. Zusammensetzung gemäß Anspruch 1, wobei die Polyisocyanatkomponente Allophanatgruppen enthält.

7. Zusammensetzung gemäß Anspruch 1, wobei die Polyisocyanatkomponente Biuretgruppen enthält.

8. Zusammensetzung gemäß Anspruch 1, wobei die Polyisocyanatkomponente Oxadiazintriongruppen enthält.

9. Ein Produkt, beinhaltend:
- einen geformten Kunststoffartikel; und
- eine mit einer Zusammensetzung gemäß Anspruch 1 gebildete gehärtete Beschichtung.

## Revendications

1. Une composition de revêtement durcissable aux UV, comprenant :
(1) un solvant inerte ;
(2) une première résine d'uréthane acrylate aliphatique formée par la réaction d'un composant polyisocyanate aliphatique contenant au moins un élément parmi des groupes iminooxadiazine dione, isocyanurate, uretdione, uréthane, allophanate, biuret et oxadiazine trione, avec un composant alcool contenant au moins un ester alkylique d'acide méth(acrylique) monobasique, linéaire ou ramifié à fonctionnalité hydroxyle, la première résine d'uréthane acrylate ayant une masse moléculaire moyenne de 800 à 2 500 Daltons, et la première résine d'uréthane acrylate contenant de 3 à 5 groupes acrylate polymérisables par molécule ;
(3) une deuxième résine d'uréthane acrylate aliphatique comprenant la structure de la formule II : 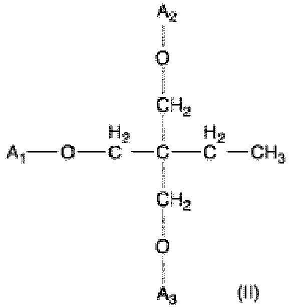 dans laquelle A₁, A₂, et A₃ sont chacun un groupe de la formule III : 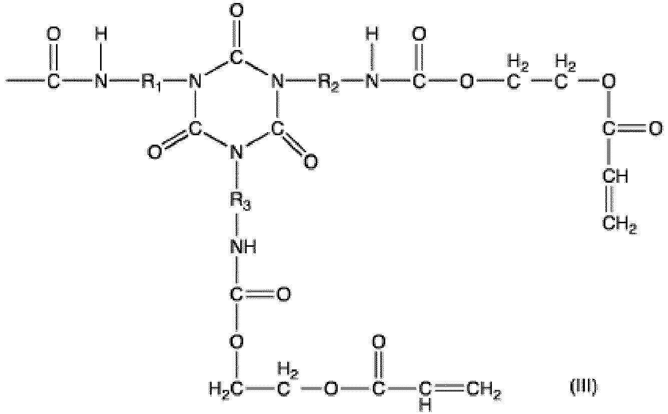 dans laquelle R₁, R₂, et R₃ de la formule III sont identiques ou différents, et comprennent chacun un groupe aliphatique linéaire ayant de 2 à 12 atomes de carbone, ou un groupe cycloaliphatique ayant de 4 à 12 atomes de carbone, le deuxième uréthane acrylate ayant une masse moléculaire moyenne de 500 à 2 000 Daltons, la deuxième résine d'uréthane acrylate contenant de 4 à 7 groupes acrylate polymérisables par molécule, et la première résine d'uréthane acrylate aliphatique et la deuxième résine d'uréthane acrylate aliphatique comprenant un rapport en poids de 1/3 à 3/1 ;
(4) un premier acrylate multifonctionnel, le premier acrylate multifonctionnel ayant une masse moléculaire moyenne de 170 à 1 000 Daltons, la composition comprenant de 5 % à 15 % en poids du premier acrylate multifonctionnel, et le premier acrylate multifonctionnel comprenant deux groupes insaturés polymérisables par molécule ;
(5) un deuxième acrylate multifonctionnel, le deuxième acrylate multifonctionnel ayant une masse moléculaire moyenne de 170 à 1 000 Daltons, la composition comprenant de 15 % à 25 % en poids du deuxième acrylate multifonctionnel, et le deuxième acrylate multifonctionnel comprenant trois groupes insaturés polymérisables par molécule ;
(6) un photoinitiateur sélectionné dans le groupe constitué d'oxydes de diphénylphosphine, de phénylglyoxylates, d'α-hydroxycétones, et d'α-hydroxycétones difonctionnels ;
(7) un stabilisateur de lumière amine encombrée ;
(8) un absorbeur d'UV comprenant au moins soit un benzotriazole, soit un benzotriazine ; et
(9) un matériau hybride organique-inorganique.

2. La composition de la revendication 1, dans laquelle le composant polyisocyanate contient des groupes iminooxadiazine dione.

3. La composition de la revendication 1, dans laquelle le composant polyisocyanate contient des groupes isocyanurate.

4. La composition de la revendication 1, dans laquelle le composant polyisocyanate contient des groupes uretdione.

5. La composition de la revendication 1, dans laquelle le composant polyisocyanate contient des groupes uréthane.

6. La composition de la revendication 1, dans laquelle le composant polyisocyanate contient des groupes allophanate.

7. La composition de la revendication 1, dans laquelle le composant polyisocyanate contient des groupes biuret.

8. La composition de la revendication 1, dans laquelle le composant polyisocyanate contient des groupes oxadiazine trione.

9. Un produit, comprenant :
- un article en plastique moulé ; et
- un revêtement durci formé avec une composition selon la revendication 1.
